# EUROPÄISCHE PATENTSCHRIFT

(11) **EP 3 313 673 B1**
(45) Veröffentlichungstag und Bekanntmachung des Hinweises auf die Patenterteilung: **07.08.2019**
(21) Anmeldenummer: 16705788.4
(22) Anmeldetag: 23.02.2016
(51) Int. Cl.: B60C 11/01

(54) **FAHRZEUGLUFTREIFEN**
PNEUMATIC VEHICLE TIRE
PNEUMATIQUE DE VÉHICULE

(30) Priorität: 24.06.2015 DE 102015211695
(43) Veröffentlichungstag der Anmeldung: 02.05.2018
(73) Patentinhaber: Continental Reifen Deutschland GmbH, 30165 Hannover (DE)
(72) Erfinder: RITTWEGER, Stefan, 30826 Garbsen (DE); STADLER, Frank, 31275 Lehrte (DE); RÖGER, Bernhard, 30823 Garbsen (DE)
(74) Vertreter: Finger, Karsten
(86) Internationale Anmeldenummer: PCT/EP2016/053705
(87) Internationale Veröffentlichungsnummer: WO 2016/206822

(56) Entgegenhaltungen:
- EP-A1- 2 610 084
- DE-A1-102006 047 324

## Beschreibung

Die Erfindung betrifft einen Fahrzeugluftreifen mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung A zur Äquatorebene des Reifens hin durch eine über den Umfang des Fahrzeugluftreifens erstreckte Rille, auf seiner von der Äquatorebene wegweisenden Seite jeweils von einer Oberfläche der Reifenseitenwand und nach radial außen von einer die Straßenkontaktfläche bildenden radial äußeren Oberfläche begrenzt wird.

### Derartige Fahrzeugluftreifen sind bekannt.

Es sind Fahrzeugluftreifen bekannt, bei denen in der Reifenschulter eine Profilreihe ausgebildet ist, bei welcher in Umfangsrichtung des Fahrzeugluftreifens hintereinander angeordnete Profilblockelemente jeweils durch Querrillen voneinander getrennt sind, wobei die Querrillen innerhalb der Bodenaufstandsbreite des Reifens ausgebildet und sich dort ausgehend von der zur Äquatorebene hin die Profilblockreihe begrenzenden Umfangsrille in axialer Richtung A nach außen bis in den Erstreckungsbereich außerhalb der Bodenaufstandsbreite erstrecken. Die Querrillen ermöglichen dabei eine gute Abführung des Wassers aus dem Bereich der Bodenaufstandsfläche des Reifens.

Bei Winterreifen ist es wünschenswert, viele wirksame Griffkanten zur Erhöhung der Schneetraktion zu erzielen. Diese werden üblicher Weise innerhalb des Bereichs der Bodenaufstandsbreite durch Kanten und Einschnitte im Profil erzeugt. Deren Einsatz ist dabei jedoch durch ihren in diesem Erstreckungsbereich des Profils bedingten Einfluss auf Trockeneigenschaften und Nassgriffeigenschaften nur begrenzt möglich.

Bei Sommerreifen ist - beispielsweise aus der DE 10 2010 036 548 A1- auch vereinzelt vorgeschlagen worden, zur Verbesserung der Geräuschdämmung in Querrillen einer Schulterprofilblockreihe innerhalb der Bodenaufstandsbreite zusätzliche Stege auszubilden, die sich vom Rillengrund ausgehend in radialer Richtung R des Reifens nach außen bis zur radial äußeren Oberfläche erstrecken und somit die Ausbreitung der Geräusche reduzieren. Schneeverzahnung und Schneegriff wird durch derartige Querrillen jedoch nicht verbessert. Darüber hinaus ist bei der Ausbildung derartiger Stege ihr potenzieller Einfluss auf Trockeneigenschaften und Nässeeigenschaften - insbesondere von Aquaplaning in axialer Richtung A - mit zu berücksichtigen.

Aus der EP 2 610 084 A1 ist ein gattungsgemäßer Fahrzeugluftreifen bekannt, bei dem in einem Schulterprofilband Querrillen ausgebildet sind, die sich ausgehend von einer Position axial außerhalb der Bodenaufstandsbreite in Richtung zum Äquator bis in eine Position axial innerhalb der Bodenaufstandsbreite erstecken und dort enden. Der Erfindung liegt die Aufgabe zugrunde, bei derartigen Fahrzeugluftreifen eine Verbesserung der Schneetraktion trotz guter Trocken- und Nässeeigenschaften zu ermöglichen.

Die Aufgabe wird erfindungsgemäß durch die Ausbildung eines Fahrzeugluftreifens Fahrzeugluftreifen mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung A zur Äquatorebene Ä des Reifens hin durch eine über den Umfang des Fahrzeugluftreifens erstreckte Rille, auf seiner von der Äquatorebene Ä wegweisenden Seite jeweils von einer Oberfläche der Reifenseitenwand und nach radial außen von einer die Straßenkontaktfläche bildenden radial äußeren Oberfläche begrenzt wird, gemäß den Merkmalen von Anspruch 1 gelöst, bei dem in wenigstens einem der beiden Schulterprofilbänder axial außerhalb der Bodenaufstandsbreite T_{A} in Umfangsrichtung U des Fahrzeugluftreifens hintereinander angeordnete Querrillen ausgebildet sind, die sich von axial außen in Richtung zur Äquatorebene hin erstrecken und außerhalb der Bodenaufstandsbreite T_{A} im Schulterprofilband enden, und bei dem im Rillengrund der Querrillen jeweils ein Steg ausgebildet, welcher quer zur Erstreckungsrichtung der Querrille erstreckt ausgebildet ist, die beiden die Querrille in Umfangsrichtung begrenzenden Rillenwände miteinander verbindet und ausgehend vom Rillengrund in radialer Richtung R nach außen bis in eine Position mit Abstand e zur radial äußeren Oberfläche des Schulterprofilbandes unterhalb der radial äußeren Oberfläche des Schulterprofilbandes erstreckt ist und dort endet.

Durch diese Ausbildung wird ermöglicht, dass im Erstreckungsabschnitt des Laufstreifenprofils außerhalb der Bodenaufstandsbreite zwischen dem zur Äquatorebene hingerichteten Erstreckungsende der Querrille und dem Steg jeweils eine Tasche ausgebildet wird, welche zusätzlichen Schneegriff ermöglichen. In den Taschen kann sich der Schnee verfangen, verdichten und ermöglicht eine zusätzliche Verzahnung mit dem Schnee und somit einem verbesserten Schneegriff durch eine Art Formschluss. Die Ausbildung außerhalb der Bodenaufstandsbreite ermöglicht auf diese Weise zusätzlichen Schneegriff ohne dabei einen besonderen Einfluss auf den Bereich innerhalb der Bodenaufstandsfläche auszuüben, wodurch Nassgriffeigenschaften und Handlingeigenschaften - insbesondere auf trockener Straße - optimiert ausgebildet und umgesetzt werden können ohne negativen Einfluss dieser zusätzlichen Schneegriffausbildung. Darüber hinaus ermöglicht der Steg außerhalb der Bodenaufstandsbreite eine zusätzliche Versteifung und somit eine Stabilität auch außerhalb der Bodenaufstandsfläche auf einem hohen Niveau. Dies begünstigt zusätzlich Traktionseigenschaften auf trockener und nasser Straße.

Besonders vorteilhaft ist die Ausbildung eines Fahrzeugreifens gemäß den Merkmalen von Anspruch 2, wobei die Querrille längs ihrer Erstreckung jeweils mit einer Tiefe T ausgebildet ist, welche jeweils den senkrecht zum Rillengrund gebildeten Abstand zwischen radial äußerer Oberfläche des Schulterprofilbandes und Rillengrund bildet, wobei der Steg bis in eine senkrecht zum Rillengrund gemessene Höhe h mit h<T erstreckt ist und dort endet. Hierdurch wird in einfacher Weise ein vollständiges Auffüllen der gebildeten Tasche und somit ein optimierter Schneegriff weiter begünstigt.

Besonders vorteilhaft ist die Ausbildung eines Fahrzeugreifens gemäß den Merkmalen von Anspruch 3, wobei die Höhe h mit (0,5)T ≤h≤(T- 1mm) ausgebildet ist. Dies ermöglicht einen guten Kompromiss aus gutem Schneefangverhalten und besonders hoher Stabilität beim Trockenhandling und Trockenbremsen.

Besonders vorteilhaft ist die Ausbildung eines Fahrzeugreifens gemäß den Merkmalen von Anspruch 4, wobei der Steg in den senkrecht zu seiner Erstreckungsrichtung von Rillenwand zu Rillenwand - insbesondere zur Umfangsrichtung U - gebildeten Querschnittebenen jeweils mit einer - insbesondere U- oder V-förmigen - vom Rillengrund ausgehend nach radial außen hin kontinuierlich verjüngt ausgebildeten Querschnittfläche ausgebildet ist. Hierdurch wird zusätzlich das Eindringen von Schnee in die gebildete Tasche erleichtert und somit der Schneegriff verbessert.

Besonders vorteilhaft ist die Ausbildung eines Fahrzeugreifens gemäß den Merkmalen von Anspruch 5, wobei der Steg beiderseits des Steges jeweils durch eine Stegflanke begrenzt wird, wobei die den Steg zur Äquatorebene Ä-Ä hin begrenzende Stegflanke mit der die die Querrille an ihrem zur Äquatorebene Ä-Ä hin gerichteten Erstreckungsende begrenzende Rillenwand in den Schnittebenen senkrecht zur von Rillenwand zu Rillenwand - insbesondere in Umfangsrichtung U - gerichteten Erstreckungsrichtung des Steges gebildeten Schnittebenen eine von radial außen nach radial innen hin V-förmig verjüngte Schnittkontur bildet. Hierdurch wird in besonders einfacher Weise das Eindringen von Schnee in die gebildete Tasche weiter erleichtert und somit der Schneegriff verbessert.

Besonders vorteilhaft ist die Ausbildung eines Fahrzeugreifens gemäß den Merkmalen von Anspruch 6, wobei der Steg an seiner den Steg nach radial außen hin begrenzenden Oberfläche mit einer Breite b₁ mit 3mm≥b₁≥1mm und im Rillengrund mit einer Breite b₂ mit b₁≥b₂≥3b₁ ausgebildet ist. Dies begünstigt in einfacher Weise das Umsetzen besonders gutes Schneefangverhalten bei hoher Stabilität beim Trockenhandling und Trockenbremsen.

Besonders vorteilhaft ist die Ausbildung eines Fahrzeugreifens gemäß den Merkmalen von Anspruch 7, wobei der in Erstreckungsrichtung der Querrille - insbesondere in axialer Richtung A - gemessene Abstand d zwischen dem Steg in der den Steg nach radial außen hin begrenzender Oberfläche und der die Querrille zur Äquatorebene Ä-Ä hin begrenzenden Rillenwand in der radial äußeren Oberfläche des Schulterprofilbandes mit 2mm≤d≤6mm ausgebildet ist. Hierdurch ist der Abstand ausreichend groß, um eine Tasche mit hoher Schneefangkapazität zur Verfügung zu stellen, und ausreichend klein, um im axial äußeren Abschnitt des Schulterprofilband eine sehr hohe Stabilität sicherzustellen.

Besonders vorteilhaft ist die Ausbildung eines Fahrzeugreifens gemäß den Merkmalen von Anspruch 8, wobei in der radial äußeren Oberfläche des Profilbandes ein Feineinschnitt ausgebildet ist, der ausgehend vom zur Äquatorebene Ä-Ä des Reifens gerichteten Erstreckungsende der Querrille in Richtung zur Äquatorebene Ä-Ä bis in den axialen Erstreckungsabschnitt der Bodenaufstandsbreite T_{A} erstreckt ist und dort in die das Profilband begrenzende Umfangsrille mündet. Hierdurch können Wintereigenschaften des Reifens weiter verbessert werden.

Besonders vorteilhaft ist die Ausbildung eines Fahrzeugreifens gemäß den Merkmalen von Anspruch 9, wobei das Schulterprofilband mit über den Umfang des Reifens hintereinander angeordneten Profilelementen ist, in denen jeweils 2 bis 6 der Querrillen ausgebildet sind, wobei jeweils zwei in Umfangsrichtung U hintereinander angeordnete Profilelemente durch eine zusätzliche Querrille getrennt sind, die sich ausgehend von der das Schulterprofilband innerhalb der Bodenaufstandsbreite T_{A} begrenzenden Umfangsrille bis in den Bereich außerhalb der Bodenaufstandsbreite T_{A} erstreckt.

Die Erfindung wird im Folgenden an Hand der in den Figuren 1 bis 6 dargestellten Ausführungsbeispiele näher erläutert. Hierin zeigen
- Fig.1: einen Umfangsabschnitt des Laufstreifenprofils eines Fahrzeugluftreifens in Draufsicht,
- Fig.2: das Laufstreifenprofil des Fahrzeugluftreifens von Fig.1 in Schnittdarstellung gemäß Schnitt II-II von Fig.1,
- Fig.3: einen Ausschnitt des Laufstreifenprofils von Fig.1 in Draufsicht,
- Fig.4: das Laufstreifenprofil von Fig.1 in Schnittdarstellung gemäß Schnitt IV-IV von Fig.3,
- Fig.5: das Laufstreifenprofil von Fig.1 in Schnittdarstellung gemäß Schnitt V-V von Fig.3 und
- Fig. 6: das Laufstreifenprofil von Fig.1 in Schnittdarstellung gemäß Schnitt VI-VI von Fig.1.

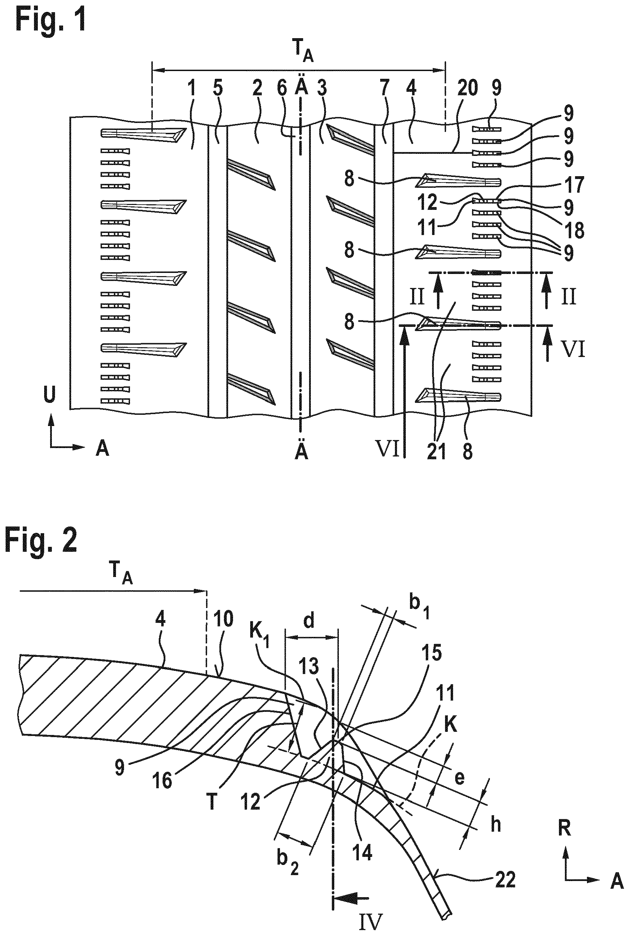

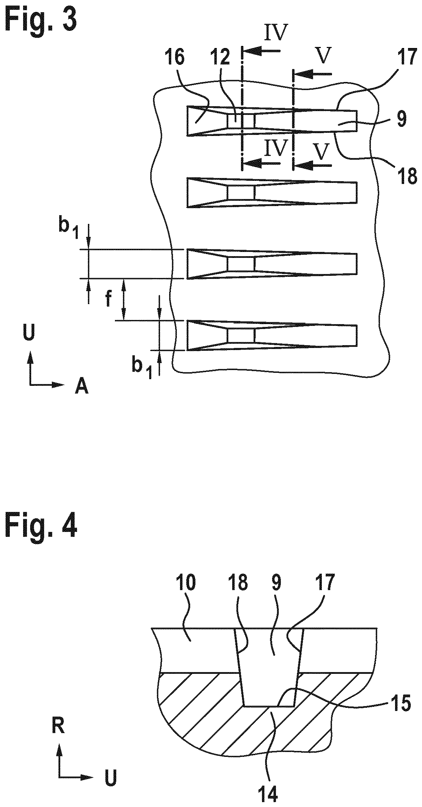

Die Figuren 1 bis 6 zeigen ein Laufstreifenprofil eines Fahrzeugluftreifens für Personenkraftwagen (PKW) oder Vans mit mehreren in axialer Richtung A des Fahrzeugluftreifens nebeneinander angeordneten, über den gesamten Umfang des Fahrzeugluftreifens erstreckten und in Umfangsrichtung U ausgerichteten Profilbändern 1, 2, 3 und 4. Im dargestellten Ausführungsbeispiel sind die Profilbänder 1, 2, 3 und 4 als Umfangsrippen ausgebildet. In alternativer - nicht dargestellter - Ausführung sind die Profilbänder als Profilblockreihen bekannter Art ausgebildet.

Die Umfangsrippen 1 und 2 sind in bekannter Weise durch eine über den gesamten Umfang des Fahrzeugluftreifens erstreckte und in Umfangsrichtung U ausgerichtete Umfangsrille 5 voneinander getrennt. Die Umfangsrippen 2 und 3 sind in bekannter Weise durch eine über den gesamten Umfang des Fahrzeugluftreifens erstreckte und in Umfangsrichtung U des Fahrzeugluftreifens ausgerichtete Umfangsrille 6 voneinander getrennt. Die Umfangsrippen 3 und 4 sind in bekannter Weise durch eine über den gesamten Umfang des Fahrzeugluftreifens erstreckte und in Umfangsrichtung U ausgerichtete Umfangsrille 7 voneinander getrennt. Die Umfangsrippen 1 und 4 sind jeweils in einer der beiden Reifenschultern angeordnet und bilden Schulterrippen. Axial zwischen den beiden Umfangsrippen 1 und 4 sind im mittleren Erstreckungsbereich des Laufstreifenprofils die Umfangsrippen 2 und 3 angeordnet.

In Fig. 1 ist die Äquatorebene Ä-Ä des Fahrzeugluftreifens dargestellt.

Die Bodenaufstandsbreite T_{A} des Fahrzeugluftreifens erstreckt sich - wie in Fig.1 dargestellt ist - in axialer Richtung A des Fahrzeugluftreifens ausgehend von einer axialen Position innerhalb des axialen Erstreckungsbereichs der in der linken Schulter ausgebildeten Umfangsrippe 1 mit axialem Abstand zur Umfangsrille 5 bis in eine axiale Position innerhalb des axialen Erstreckungsbereichs der in der rechten Schulter ausgebildeten Umfangsrippe 4 mit axialem Abstand zur Umfangsrille 7.

Die Bodenaufstandsbreite T_{A} ist die Breite des den Boden berührenden Teils des Laufstreifens, welcher dem statisch ermittelten Footprint gemäß E.T.R.T.O.-Standards (Last bei 70 % der Tragfähigkeit bei einem Innendruck von 2,5 bar, Innendruck 85 % von 2,5 bar) entspricht.

Die Figuren 2 bis 6 zeigen die Ausbildung der in der rechten Schulter des Laufstreifenprofils von Fig.1 ausgebildeten Umfangrippe 4. In analoger Weise ist auch die Umfangsrippe 1 ausgebildet, wie in Fig.1 zu erkennen ist. Die Beschreibung der Ausbildung erfolgt im Folgenden der Einfachheit halber nur im Zusammenhang mit der Umfangsrippe 4.

Die Umfangsrippen 1, 2, 3 und 4 sind - wie in Fig.2 anhand der Umfangsrippe 4 dargestellt ist - in radialer Richtung R des Fahrzeugluftreifens nach außen hin von einer radialen äußeren Oberfläche 10 begrenzt, welche im Erstreckungsbereich der Bodenaufstandsbreite T_{A} die Straßenkontaktoberfläche bildet.

Die Umfangsrippe 4 ist in axialer Richtung A zur Äquatorebene hin in bekannter Weise durch eine Rippenflanke begrenzt, welche die zur Umfangsrippe 4 hinweisende Rillenwand der Umfangsrille 7 bildet. Die Umfangsrippe 4 ist in axialer Richtung A zu der von der Äquatorebene Ä-Ä wegweisenden Seite in bekannter Weise durch eine Rippenflanke begrenzt, welche in radialer Verlängerung in die nach axial außen weisende Oberfläche der Reifenseitenwand 22 übergeht.

Über den Umfang des Fahrzeugluftreifens hinweg verteilt sind in der Umfangsrippe 4 eine Vielzahl von in Umfangsrichtung U des Fahrzeugluftreifens hintereinander angeordneten Querrillen 8 bekannter Art ausgebildet, welche sich in der Umfangsrippe4 jeweils ausgehend von einer axialen Position außerhalb der Bodenaufstandsbreite T_{A} in axialer Richtung A des Fahrzeugluftreifens in Richtung zur Äquatorebene Ä-Ä hin bis in eine axiale Position innerhalb der Bodenaufstandsbreite T_{A} erstrecken und dort mit Abstand zur Umfangsrille 7 enden.

In Umfangsrichtung U des Fahrzeugluftreifens gesehen unterteilen die Querrillen 8 die Umfangsrippe 4 dabei in eine Vielzahl von hintereinander angeordneten Profilelementabschnitten 21, die sich jeweils in Umfangsrichtung U zwischen zwei hintereinander angeordneten Querrillen 8 erstrecken. In jedem dieser Profilelementabschnitte 21sind - wie in Fig.1, Fig.2 und Fig. 3 zu erkennen ist - jeweils mehrere Querrillen 9 ausgebildet. Die Querrillen 9 erstrecken sich vollständig außerhalb der Bodenaufstandsbreite T_{A}. Die Querrillen 9 erstrecken sich dabei ausgehend von derjenigen die Umfangsrippe 4 in axialer Richtung A hin begrenzenden Flanke, welche in ihrer radialen Verlängerung in die Oberfläche der Reifenseitenwand 22 übergeht, in axialer Richtung A zur Äquatorebene Ä-Ä hin und enden mit Abstand zum axialen Erstreckungsabschnitt von der Position der Bodenaufstandsbreite T_{A} außerhalb der Bodenaufstandsbreite T_{A} in der Umfangsrippe 4.

Die Querrillen 9 sind - wie in Fig.2 dargestellt - in bekannter Weise in radialer Richtung R des Fahrzeugluftreifens nach innen hin durch einen Rillengrund 11 begrenzt. Der Rillengrund 11 erstreckt sich dabei entlang der in axialer Richtung A des Fahrzeugluftreifens erstreckten Querrillen 9 ebenfalls in axialer Richtung A des Fahrzeugluftreifens. Jede Querrille 9 ist - wie in den Figuren 2, 3, 4 und 5 dargestellt ist - in Umfangsrichtung U beiderseits des Rillengrundes 11 jeweils durch eine Rillenwand 17 bzw. 18 begrenzt. Die Rillenwände 17 und 18 ertrecken sich jeweils ausgehend vom Rillengrund 11 in radialer Richtung R nach außen hin bis zur radial äußeren Oberfläche 10 und enden dort. Die Querrille 9 ist an ihrem in axialer Richtung A des Fahrzeugluftreifens zur Äquatorebene Ä-Ä ausgebildeten stumpf ausgebildeten Erstreckungsende von einer Rillenwand 16 begrenzt. Die Rillenwand 16 erstreckt sich ausgehend vom Rillengrund 11 der Querrille 9 in radialer Richtung R nach außen bis zur radial äußeren Oberfläche 10 der Umfangsrippe 4.

In den Querschnittebenen, welche die Reifenachse beinhalten, ist die radial äußere Oberfläche 10 der Umfangsrippe 4 - wie in Fig.2 dargestellt ist - mit einer Schnittkonturlinie K₁ ausgebildet. Die Schnittkonturlinie K₁ ist im axial äußeren Erstreckungsabschnitt des Reifens mit einer nach radial innen hin ausgebildeten Krümmung ausgebildet. Die Schnittkonturlinie K₁ begrenzt dabei am axial äußeren Erstreckungsende der Umfangsrippe 4 die Umfangsrippe 4 auch in axialer Richtung A hin und bildet dabei die Schnittkonturlinie der die Umfangsrippe 4 auf ihrer von der Äquatorebene Ä-Ä wegweisenden Seite begrenzenden Flanke und geht dann tangential in die Konturlinie der radial äußeren Oberfläche der Seitenwand über.

Der Rillengrund 11 ist - wie in Fig. 2 dargestellt ist - in den Schnittebenen, welche die Reifenachse beinhalten, mit einer Konturlinie K ausgebildet, welche ebenfalls eine leichte, nach radial innen hin gerichtete Krümmung aufweist.

In der Querrille 9 ist jeweils ein in Umfangsrichtung U des Fahrzeugluftreifens und somit quer zur Erstreckungsrichtung der Querrille 9 ausgerichteter Steg 12 ausgebildet, welcher sich aus dem Rillengrund 11 in radialer Richtung R des Fahrzeugluftreifens nach außen erhebt und die beiden Rillenwände 17 und 18 der Querrille 9 miteinander verbindet.

Der Steg 12 ist in axialer Richtung A des Fahrzeugluftreifens und somit in Erstreckungsrichtung der Querrille 9 zu der zur Äquatorebene Ä-Ä hinweisenden Seite hin von einer Stegflanke 13 und zu der von der Äquatorebene Ä-Ä wegweisenden Seite hin von einer Stegflanke 14 begrenzt. Der Steg 12 erstreckt sich in den Querschnittsebenen, welche die Reifenachse beinhalten, Richtung senkrecht zur Rillengrundkonturlinie K gesehen bis in eine Höhe h vom Rillengrund 11, in welcher der Steg durch eine Scheitelfläche 15 begrenzt wird.

Die Querrille 9 ist längs ihrer Erstreckung in axialer Richtung mit einer Tiefe T ausgebildet, welche jeweils den senkrecht zum Rillengrund 11 und somit senkrecht zur Konturlinie K des Rillengrundes 11 gebildeten Abstand von der Konturlinie K₁ der radial äußeren Oberfläche 10 angibt.

In der Position des Steges 12 ist dabei die Höhe h mit h < T ausgebildet. Die Scheitelfläche 15 ist in dem senkrecht zum Rillengrund 11 gemessenen Abstand e zur Konturlinie K₁ der radial äußeren Oberfläche 10 ausgebildet. Die Scheitelfläche 15 ist in einer Position zwischen Konturlinie K des Rillengrundes 11 und der Konturlinie K₁ der radial äußeren Oberfläche 10 ausgebildet. Die Scheitelfläche 15 ist mit einer in Erstreckungsrichtung des Rillengrundes K gemessenen Breite b₁ ausgebildet. Der Steg 12 ist im Rillengrund 11 mit einer Breite b₂ ausgebildet. Die beiden Stegflanken 13 und 14 bilden - wie in Fig. 2 zu erkennen ist - in den Querschnittebenen, welche die Reifenachse beinhalten, ein umgedrehtes "V". Die V-Form bildet die Querschnittkontur des Steges 12, welche sich ausgehend vom Rillengrund 11 zur Scheitelfläche 15 hin kontinuierlich verjüngt.

Die Stirnflächen 13 und 14 sind in den die Reifenachse beinhaltenden Querschnittebenen jeweils geradlinig ausgebildet.

In anderer - nicht dargestellter - Ausführung bilden die beiden Stegflanken 13 und 14 in den Querschnittebenen, welche die Reifenachse beinhalten, die Form eines umgedrehten "U".

Wie in Fig. 2 zu erkennen ist, ist der Steg 12 in axialer Richtung A unmittelbar im Anschluss an die Schnittposition der Rillenwand 16 mit dem Rillengrund 11 im Rillengrund 11 ausgebildet, so dass die Rillenwand 16 und die Stegflanke 13 in den Querschnittsebenen, welche die Reifenachse beinhalten, eine V-Form bilden. Zwischen der Rillenwand 16 und dem Steg 12 ist auf diese Weise in der Querrille 9 eine Art Tasche ausgebildet.

Der in axialer Richtung A des Fahrzeugluftreifens gemessene Abstand d zwischen der Position der Rillenwand 16 in der radial äußeren Oberfläche 10 und der den Steg 12 begrenzenden Scheitelfläche 15 ist mit 2mm ≤ d ≤ 6mm ausgebildet.

Die Breite b₁ ist mit 3mm ≥ b₁ ≥ 1mm, beispielsweise mit b₁ = 1mm ausgebildet. Die Breite b₂ ist mit 6b₁ ≥ b₂ ≥ 3b₁ ausgebildet.

Beispielsweise ist b₁ = 1mm und b₂ = 4mm gewählt.
Die Höhe h ist mit (0,5 T) ≤ h ≤ (T - 1mm) ausgebildet. Beispielsweise ist die Tiefe T in der Position des Steges 12 mit T = 5mm und h mit h = 4mm ausgebildet. Die Tiefe T in der Position des Steges 12 wird dabei aus dem Mittelwert der in axialer Richtung A beiderseits des Steges 12 jeweils unmittelbar neben dem Steg 12 gemessenen Tiefen T ermittelt.

Die Querrillen 9 sind an ihrer breitesten Stelle in der radial äußeren Oberfläche 10 mit einer Breite B₁ mit 2mm ≤ B₁ ≤ 4mm ausgebildet. Im dargestellten Ausführungsbeispiel ist die breiteste Stelle der Querrille 9 jeweils in der axialen Position der Rillenwand 16 ausgebildet.

Die Querrillen 9 sind in Umfangsrichtung U des Fahrzeugluftreifens gesehen jeweils so positioniert, dass zwei in Umfangsrichtung hintereinander ausgebildete Querrillen 9 mit einem in der radial äußeren Oberfläche 10 gemessenen Abstand f mit f ≥ B₁ angeordnet sind.

In den Profilelementabschnitten 21 sind jeweils 2 bis 6 derartige Querrillen ausgebildet. Im dargestellten Ausführungsbeispiel sind im Profilelementabschnitt 21 vier Querrillen 9 eingezeichnet.

Im dargestellten Ausführungsbeispiel sind in den Profilelementabschnitten 21 der Umfangsrippe 4 jeweils gleich viele Querrillen 9 eingezeichnet. In einem anderen, nicht dargestellten Ausführungsbeispiel variiert die Zahl in einem Profilelementabschnitt 21 ausgebildeten Querrillen 9 von Profilelementabschnitt 21 zu Profilelementabschnitt 21 über den Umfang des Reifens hinweg.

In Fig.1 ist an einer Querrille 9 zusätzlich ein Ausführungsbeispiel dargestellt, bei welcher ausgehend von der Rillenwand 16 der Querrille 9 jeweils ein Feineinschnitt 20 bekannter Art sich bis in den Bereich der Bodenaufstandsbreite T_{A} in der radial äußeren Oberfläche der Umfangsrippe 4 in axialer Richtung A des Fahrzeugluftreifens hinein und dort weiter bis zur Umfangsrille 7 erstreckt und in diese einmündet. Derartige Feineinschnitte 20 sind in einem - nicht dargestellten - Ausführungsbeispiel dabei zu jedem der Querrillen 9 ausgebildet. In einem anderen Ausführungsbeispiel sind derartige Feineinschnitte 20 nur zu einigen der in der Umfangsrippe 4 ausgebildeten Querrillen 9 ausgebildet.

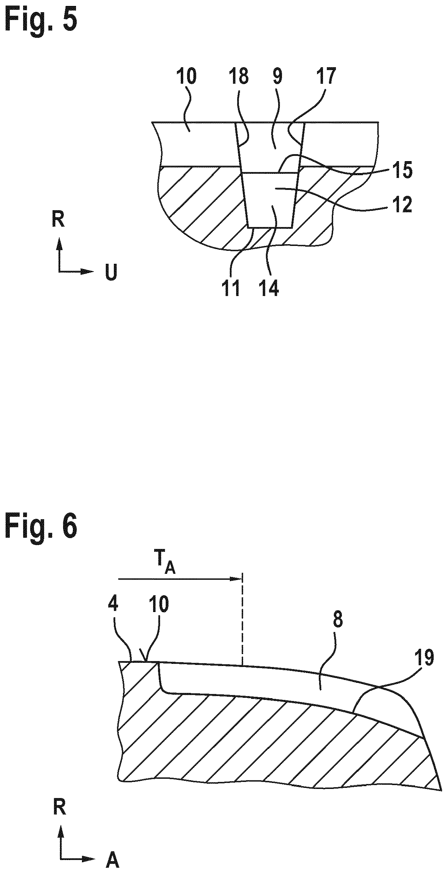

Wie in der Fig.1 und Fig. 6 dargestellt ist, ist die Querrille 8 in radialer Richtung R nach innen hin in bekannter Weise durch einen Rillengrund 19 begrenzt.

Im dargestellten Ausführungsbeispiel ist das Profilband 4 als Umfangsrippe dargestellt. In einem anderen, nicht dargestellten Ausführungsbeispiel ist das Profilband 4 als Profilblockreihe bekannter Art mit Profilblockelementen und Querrillen 8 ausgebildet, wobei bei diesem Ausführungsbeispiel die Querrillen 8 in axialer Richtung A des Fahrzeugluftreifens zur Äquatorebene Ä-Ä hin bis zur Umfangsrille 7 erstreckt sind und in diese einmünden und die Profilelemente 21 die durch die Querrillen 8 begrenzten Profilblockelemente bilden.

### Bezugszeichenliste

### (Teil der Beschreibung)

- 1: Umfangsrippe
- 2: Umfangsrippe
- 3: Umfangsrippe
- 4: Umfangsrippe
- 5: Umfangsrille
- 6: Umfangsrille
- 7: Umfangsrille
- 8: Querrille
- 9: Querrille
- 10: Radial äußere Oberfläche
- 11: Rillengrund
- 12: Steg
- 13: Stegflanke
- 14: Stegflanke
- 15: Scheitel
- 16: Rillenwand
- 17: Rillenwand
- 18: Rillenwand
- 19: Rillengrund
- 20: Feineinschnitt
- 21: Profilelementabschnitt
- 22: Oberfläche der Reifenseitenwand

## Patentansprüche

1. Fahrzeugluftreifen mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband (1,4) ausgebildet ist, das in axialer Richtung A zur Äquatorebene Ä-Ä des Reifens hin durch eine über den Umfang des Fahrzeugluftreifens erstreckte Rille (7,5), auf seiner von der Äquatorebene Ä-Ä wegweisenden Seite jeweils von einer Oberfläche (22) der Reifenseitenwand und nach radial außen von einer die Straßenkontaktfläche bildenden radial äußeren Oberfläche (10) begrenzt wird,
**dadurch gekennzeichnet,**
**dass** in wenigstens einem (4) der beiden Schulterprofilbänder (1,4) axial außerhalb der Bodenaufstandsbreite T_{A} in Umfangsrichtung U des Fahrzeugluftreifens hintereinander angeordnete Querrillen (9) ausgebildet sind, die sich von axial außen in Richtung zur Äquatorebene Ä-Ä hin erstrecken und außerhalb der Bodenaufstandsbreite T_{A} im Schulterprofilband (4) enden,
**dass** im Rillengrund (11) der Querrillen (9) jeweils ein Steg (12) ausgebildet, welcher quer zur Erstreckungsrichtung der Querrille (9) erstreckt ausgebildet ist, die beiden die Querrille (9) in Umfangsrichtung U begrenzenden Rillenwände (17,18) miteinander verbindet und ausgehend vom Rillengrund (11) in radialer Richtung R nach außen bis in eine Position mit Abstand e zur radial äußeren Oberfläche (10) des Schulterprofilbandes (4) unterhalb der radial äußeren Oberfläche (10) des Schulterprofilbandes (4) erstreckt ist und dort endet.

2. Fahrzeugluftreifen gemäß den Merkmalen von Anspruch 1,
wobei die Querrille (9) längs ihrer Erstreckung jeweils mit einer Tiefe T ausgebildet ist, welche jeweils den senkrecht zum Rillengrund (11) gebildeten Abstand zwischen radial äußerer Oberfläche (10) des Schulterprofilbandes (4) und Rillengrund (11) bildet,
wobei der Steg (12) bis in eine senkrecht zum Rillengrund (11) gemessene Höhe h mit h<T erstreckt ist und dort endet.

3. Fahrzeugluftreifen gemäß den Merkmalen von Anspruch 2,
wobei die Höhe h mit (0,5)T ≤ h ≤ (T- 1mm) ausgebildet ist.

4. Fahrzeugluftreifen gemäß den Merkmalen von einem oder mehreren der vorangegangenen Ansprüche,
wobei der Steg (12) in den senkrecht zu seiner Erstreckungsrichtung von Rillenwand (17) zu Rillenwand (18) - insbesondere zur Umfangsrichtung U - gebildeten Querschnittebenen jeweils mit einer - insbesondere U- oder V-förmigen - vom Rillengrund (11) ausgehend nach radial außen hin kontinuierlich verjüngt ausgebildeten Querschnittfläche ausgebildet ist.

5. Fahrzeugluftreifen gemäß den Merkmalen von einem oder mehreren der vorangegangenen Ansprüche,
wobei der Steg (12) beiderseits des Steges (12) jeweils durch eine Stegflanke (13,14) begrenzt wird,
wobei die den Steg zur Äquatorebene Ä-Ä hin begrenzende Stegflanke (13) mit der die die Querrille (9) an ihrem zur Äquatorebene Ä-Ä hin gerichteten Erstreckungsende begrenzende Rillenwand (16) in den Schnittebenen senkrecht zur von Rillenwand zu Rillenwand - insbesondere in Umfangsrichtung U - gerichteten Erstreckungsrichtung des Steges (12) gebildeten Schnittebenen eine von radial außen nach radial innen hin V-förmig verjüngte Schnittkontur bildet.

6. Fahrzeugluftreifen gemäß den Merkmalen von einem oder mehreren der vorangegangenen Ansprüche,
wobei der Steg (12) an seiner den Steg (12) nach radial außen hin begrenzenden Oberfläche (15) mit einer Breite b₁ mit 3mm≥b₁≥1mm und im Rillengrund (11) mit einer Breite b₂ mit 6b₁≥ b₂ ≥ 3b₁ ausgebildet ist.

7. Fahrzeugluftreifen gemäß den Merkmalen von einem oder mehreren der vorangegangenen Ansprüche,
wobei der in Erstreckungsrichtung der Querrille (9) - insbesondere in axialer Richtung A - gemessene Abstand d zwischen dem Steg (12) in der den Steg (12) nach radial außen hin begrenzender Oberfläche (15) und der die Querrille (9) zur Äquatorebene Ä-Ä hin begrenzenden Rillenwand (16) in der radial äußeren Oberfläche (10) des Schulterprofilbandes (4) mit 2mm≤d≤6mm ausgebildet ist.

8. Fahrzeugluftreifen gemäß den Merkmalen von einem oder mehreren der vorangegangenen Ansprüche,
wobei in der radial äußeren Oberfläche (10) des Profilbandes (4) ein Feineinschnitt (20) ausgebildet ist, der ausgehend vom zur Äquatorebene Ä-Ä des Reifens gerichteten Erstreckungsende der Querrille (9) in Richtung zur Äquatorebene Ä-Ä bis in den axialen Erstreckungsabschnitt der Bodenaufstandsbreite T_{A} erstreckt ist und dort in die das Profilband (4) begrenzende Umfangsrille (7) mündet.

9. Fahrzeugluftreifen gemäß den Merkmalen von einem oder mehreren der vorangegangenen Ansprüche,
wobei das Schulterprofilband (4) mit über den Umfang des Reifens hintereinander angeordneten Profilelementen (21) ausgebildet ist, in denen jeweils 2 bis 6 der Querrillen (9) ausgebildet sind,
wobei jeweils zwei in Umfangsrichtung U hintereinander angeordnete Profilelemente (21) durch eine zusätzliche Querrille (8) getrennt sind, die sich ausgehend von der das Schulterprofilband (4) innerhalb der Bodenaufstandsbreite T_{A} begrenzenden Umfangsrille (7) bis in den Bereich außerhalb der Bodenaufstandsbreite T_{A} erstreckt.

## Claims

1. Pneumatic vehicle tyre with a tread profile, which extends in the axial direction A of the pneumatic vehicle tyre between two tyre shoulders, in which a shoulder profile strip (1, 4) made to extend over the circumference of the pneumatic vehicle tyre is respectively formed and is bounded in the axial direction A towards the equatorial plane Ä-Ä of the tyre by a groove (7, 5) made to extend over the circumference of the pneumatic vehicle tyre and is respectively bounded on the side of said profile strip facing away from the equatorial plane Ä-Ä by a surface (22) of the tyre sidewall and radially outwards by a radially outer surface (10) forming the road contact surface,
**characterized**
**in that** transverse grooves (9) arranged one after the other in the circumferential direction U of the pneumatic vehicle tyre are formed in at least one (4) of the two shoulder profile strips (1, 4) axially outside of the ground contact width T_{A} and extend from axially outside in the direction of the equatorial plane Ä-Ä and end outside the ground contact width T_{A} in the shoulder profile strip (4), in that in the groove base (11) of the transverse grooves (9) there is respectively formed a web (12) which is made to extend transversely to the direction of extent of the transverse groove (9), connects the two groove walls (17, 18) bounding the transverse groove (9) in the circumferential direction U to each other and is made to extend outwards from the groove base (11) in the radial direction R to a position at a distance e from the radially outer surface (10) of the shoulder profile strip (4) below the radially outer surface (10) of the shoulder profile strip (4) and ends there.

2. Pneumatic vehicle tyre according to the features of Claim 1,
wherein the transverse groove (9) is in each case formed along its extent with a depth T, which respectively forms the distance between the radially outer surface (10) of the shoulder profile strip (4) and the groove base (11) that is formed perpendicularly to the groove base (11),
wherein the web (12) is made to extend to a height h, measured perpendicularly to the groove base (11), with h < T, and ends there.

3. Pneumatic vehicle tyre according to the features of Claim 2,
wherein the height h is formed with (0.5)T ≤ h ≤ (T - 1 mm).

4. Pneumatic vehicle tyre according to the features of one or more of the preceding claims,
wherein the web (12) is formed in the cross-sectional planes formed perpendicularly to the direction of its extent from groove wall (17) to groove wall (18) - in particular to the circumferential direction U - respectively with a - in particular U-shaped or V-shaped - cross-sectional area formed as continuously tapering radially outwards from the groove base (11).

5. Pneumatic vehicle tyre according to the features of one or more of the preceding claims,
wherein the web (12) is respectively bounded on both sides of the web (12) by a web flank (13, 14), wherein the web flank (13) bounding the web towards the equatorial plane Ä-Ä forms with the groove wall (16) bounding the the transverse groove (9) at the end of its extent directed towards the equatorial plane Ä-Ä in the sectional planes, sectional planes formed perpendicularly to the direction of extent of the web (12) directed from groove wall to groove wall - in particular in the circumferential direction U - a sectional contour tapering in a V-shaped manner from radially outside to radially inside.

6. Pneumatic vehicle tyre according to the features of one or more of the preceding claims,
wherein the web (12) is formed on its surface (15) bounding the web (12) radially outwards with a width b₁, with 3 mm ≥ b₁ ≥ 1 mm, and in the groove base (11) with a width b₂, with 6b₁ ≥ b₂ ≥ 3b₁.

7. Pneumatic vehicle tyre according to the features of one or more of the preceding claims,
wherein the distance d, measured in the direction of extent of the transverse groove (9) - in particular in the axial direction A - between the web (12) in the surface (15) bounding the web (12) radially outwards and the groove wall (16), bounding the transverse groove (9) towards the equatorial plane Ä-Ä, in the radially outer surface (10) of the shoulder profile strip (4) is formed with 2 mm ≤ d ≤ 6 mm.

8. Pneumatic vehicle tyre according to the features of one or more of the preceding claims,
wherein in the radially outer surface (10) of the profile strip (4) there is formed a sipe (20), which is made to extend from the end of the extent of the transverse groove (9) that is directed towards the equatorial plane Ä-Ä of the tyre in the direction of the equatorial plane Ä-Ä into the axial portion of extent of the ground contact width T_{A} and opens out there into the circumferential groove (7) bounding the profile strip (4).

9. Pneumatic vehicle tyre according to the features of one or more of the preceding claims,
wherein the shoulder profile strip (4) is formed with profile elements (21) arranged one behind the other over the circumference of the tyre, in which 2 to 6 of the transverse grooves (9) are respectively formed,
wherein in each case two profile elements (21) arranged one behind the other in the circumferential direction U are separated by an additional transverse groove (8), which extends from the circumferential groove (7) bounding the shoulder profile strip (4) within the ground contact width T_{A} into the region outside the ground contact width T_{A}.

## Revendications

1. Pneumatique de véhicule avec un profil de bande de roulement, qui s'étend dans la direction axiale A du pneumatique de véhicule entre deux épaulements de pneumatique, dans lesquels est respectivement formée une bande de profil d'épaulement (1, 4) s'étendant sur la périphérie du pneumatique de véhicule, qui est limitée en direction axiale A vers le plan de l'équateur Ä-Ä du pneu par une rainure (7, 5) s'étendant sur la périphérie du pneumatique de véhicule, sur son côté détourné du plan de l'équateur Ä-Ä respectivement par une surface (22) du flanc de pneu et radialement vers l'extérieur par une surface radialement extérieure (10) formant la face de contact avec la chaussée,
**caractérisé en ce que**
dans au moins une (4) des deux bandes de profil d'épaulement (1, 4) sont formées des rainures transversales (9) disposées l'une derrière l'autre dans la direction périphérique U du pneumatique de véhicule axialement à l'extérieur de la largeur de la surface d'appui au sol T_{A}, qui s'étendent depuis le côté axialement extérieur en direction du plan de l'équateur Ä-Ä et se terminent dans la bande de profil d'épaulement (4) à l'extérieur de la largeur de la surface d'appui au sol T_{A},
dans le fond de rainure (11) des rainures transversales (9) est respectivement formée une nervure (12), qui s'étend transversalement à la direction d'extension des rainures transversales (9), qui relie l'une à l'autre les deux parois de rainure (17, 18) limitant les rainures transversales (9) en direction périphérique U et qui s'étend à partir du fond de rainure (11) en direction radiale R vers l'extérieur jusque dans une position située à une distance e de la surface radialement extérieure (10) de la bande de profil d'épaulement (4) en dessous de la surface radialement extérieure (10) de la bande de profil d'épaulement (4) et se termine en ce point.

2. Pneumatique de véhicule selon les caractéristiques de la revendication 1,
dans lequel la rainure transversale (9) est formée le long de son extension respectivement avec une profondeur T, qui forme respectivement la distance formée perpendiculairement au fond de rainure (11) entre la surface radialement extérieure (10) de la bande de profil d'épaulement (4) et le fond de rainure (11),
dans lequel la nervure (12) s'étend jusqu'à une hauteur h mesurée perpendiculairement au fond de rainure (11), avec h<T, et se termine en ce point.

3. Pneumatique de véhicule selon les caractéristiques de la revendication 2,
dans lequel la hauteur h est réalisée avec (0,5)T ≤ h ≤ (T-1 mm).

4. Pneumatique de véhicule selon les caractéristiques d'une ou de plusieurs des revendications précédentes,
dans lequel la nervure (12) est formée dans les plans de section transversale formés perpendiculairement à sa direction d'extension d'une paroi de rainure (17) à une paroi de rainure (18) - en particulier à la direction périphérique U - respectivement avec une surface de section transversale - en particulier en forme de U ou de V - s'amincissant de façon continue à partir du fond de rainure (11) en direction du côté radialement extérieur.

5. Pneumatique de véhicule selon les caractéristiques d'une ou de plusieurs des revendications précédentes, dans lequel la nervure (12) est limitée de part et d'autre de la nervure (12) respectivement par un flanc de nervure (13, 14),
dans lequel le flanc de nervure (13) limitant la nervure en direction du plan de l'équateur Ä-Ä forme avec la paroi de rainure (16) limitant la la rainure transversale (9) à son extrémité d'extension dirigée vers le plan de l'équateur Ä-Ä dans les plans de coupe, plans de coupe formés perpendiculairement à la direction d'extension de la nervure (12) orientée de paroi de rainure à paroi de rainure - en particulier dans la direction périphérique U - un contour de coupe s'amincissant en forme de V du côté radialement extérieur vers le côté radialement intérieur.

6. Pneumatique de véhicule selon les caractéristiques d'une ou de plusieurs des revendications précédentes,
dans lequel la nervure (12) est réalisée sur sa surface (15) limitant la nervure (12) vers le côté radialement extérieur avec une largeur b₁ avec 3 mm ≥ b₁ ≥ 1 mm, et dans le fond de rainure (11) avec une largeur b₂ avec 6b₁ ≥ b₂ ≥ 3b₁.

7. Pneumatique de véhicule selon les caractéristiques d'une ou de plusieurs des revendications précédentes,
dans lequel la distance d mesurée dans la direction d'extension de la rainure transversale (9) - en particulier dans la direction axiale A - entre la nervure (12) dans la surface (15) limitant la nervure (12) en direction du côté radialement extérieur et la paroi de rainure (16) limitant la rainure transversale (9) en direction du plan de l'équateur Ä-Ä est réalisée dans la surface radialement extérieure (10) de la bande de profil d'épaulement (4) avec 2 mm ≤ d ≤ 6 mm.

8. Pneumatique de véhicule selon les caractéristiques d'une ou de plusieurs des revendications précédentes,
dans lequel une fine entaille (20) est formée dans la surface radialement extérieure (10) de la bande de profil (4), et elle s'étend à partir de l'extrémité de l'extension de la rainure transversale (9) orientée vers le plan de l'équateur Ä-Ä du pneu en direction du plan de l'équateur Â-Â jusque dans la partie d'extension axiale de la largeur de surface d'appui au sol T_{A} et y débouche dans la rainure périphérique (7) limitant la bande de profil (4).

9. Pneumatique de véhicule selon les caractéristiques d'une ou de plusieurs des revendications précédentes, dans lequel la bande de profil d'épaulement (4) est formée avec des éléments de profil (21) disposés l'un derrière l'autre sur la périphérie du pneu, dans lesquels sont chaque fois formées 2 à 6 des rainures transversales (9),
dans lequel chaque fois deux éléments de profil (21) disposés l'un derrière l'autre en direction périphérique U sont séparés par une rainure transversale supplémentaire (8), qui s'étend à partir de la rainure périphérique (7) limitant la bande de profil d'épaulement (4) à l'intérieur de la largeur de la surface d'appui au sol T_{A} jusque dans la région située à l'extérieur de la largeur de la surface d'appui au sol T_{A}.
